# EUROPÄISCHE PATENTANMELDUNG

(11) **EP 2 620 333 A1**
(43) Veröffentlichungstag der Anmeldung: **31.07.2013**
(21) Anmeldenummer: 12152330.2
(22) Anmeldetag: 24.01.2012
(51) Int. Cl.: B60R 21/13

(54) **Überrollschutzsystem für Kraftfahrzeuge**

(71) Anmelder: ISE Automotive GmbH, 51702 Bergneustadt (DE)
(72) Erfinder: Naß, Michael, 51702 Bergneustadt (DE)
(74) Vertreter: Kalkoff & Partner

(57) **Zusammenfassung**

Die Erfindung betrifft ein Überrollschutzsystem für Kraftfahrzeuge, mit einem Überrollkörper, der mittels einer Antriebseinheit aus einer durch ein Verkleidungsbauteil überdeckten Ruhelage in eine das Verkleidungsbauteil durchdringende Überschlagsposition verstellbar ist. Um ein Überrollschutzsystem für Kraftfahrzeuge der eingangs genannten Art bereitzustellen, bei dem die den Überrollkörper überdeckenden Verkleidungsbauteile zuverlässig durch den Überrollkörper durchdrungen werden können, ist vorgesehen, dass im Bereich zwischen dem Verkleidungsbauteil und dem Überrollkörper eine Öffnungseinheit angeordnet ist, die derart ausgebildet ist, dass deren Aktivierung die Ausbildung einer Durchtrittsöffnung für den Überrollkörper in dem Verkleidungsbauteil bewirkt.

## Beschreibung

Die Erfindung betrifft ein Überrollschutzsystem für Kraftfahrzeuge, mit einem Überrollkörper, der mittels einer Antriebseinheit aus einer durch ein Verkleidungsbauteil überdeckten Ruhelage in eine das Verkleidungsbauteil durchdringende Überschlagsposition verstellbar ist.

Überrollschutzsysteme der eingangs genannten Art mit aufstellbaren Überrollkörpern sind in vielfältigen Ausgestaltungen aus dem Stand der Technik bekannt. Derartige Überrollschutzsysteme bieten den Vorteil, dass die Überrollkörper, bei denen es sich bspw. um längsverstellbare Profilkörper oder um aufstellbare Klappbügel handeln kann, in ihrer Ruhelage von außen nicht sichtbar am Fahrzeug angeordnet werden können. Erst im Gefahrenfall, d. h. bei einem drohenden Überschlag erfolgt eine Verlagerung der Überrollkörper aus deren Ruhelage in die Überschlagsposition, wobei dabei die Überrollkörper jedoch die Verkleidungsbauteile durchdringen müssen. Die Antriebsenergie bekannter Überrollschutzsysteme zur Aufstellung der Überrollkörper ist dabei üblicherweise derart bemessen, dass eine zuverlässige Durchdringung der Verkleidungsbauteile gewährleistet ist. Unter ungünstigen Umständen besteht jedoch die Gefahr, dass der Überrollkörper nicht vollständig aufgestellt wird, wobei der durch die Verkleidungsbauteile entgegengebrachte Widerstand die Ausfahrbewegung des Überrollkörpers hemmt. Einem besonderen Risiko unterliegen dabei Überrollkörper, die als Klappbügel ausgebildet sind, da deren Aufstellbewegung nicht unmittelbar gegen die Verkleidungsbauteile gerichtet ist.

Der Erfindung liegt die Aufgabe zugrunde, ein Überrollschutzsystem für Kraftfahrzeuge der eingangs genannten Art bereitzustellen, bei dem die den Überrollkörper überdeckenden Verkleidungsbauteile zuverlässig durch den Überrollkörper durchdrungen werden können.

Die Erfindung löst die Aufgabe durch ein Überrollschutzsystem mit den Merkmalen des Anspruchs 1. Vorteilhafte Weiterbildung der Erfindung sind in den abhängigen Ansprüchen angegeben.

Kennzeichnend für das erfindungsgemäße Überrollschutzsystem ist, dass im Bereich zwischen dem Verkleidungsbauteil und dem Überrollkörper eine Öffnungseinheit angeordnet ist, die derart ausgebildet ist, dass deren Aktivierung die Ausbildung einer Durchtrittsöffnung für den Überrollkörper in dem Verkleidungsbauteil bewirkt. Wesentliches Merkmal der Erfindung ist die von einer Antriebseinheit für den Überrollkörper unabhängige Öffnungseinheit, welche dazu dient, in dem Verkleidungsbauteil eine Durchtrittsöffnung auszubilden, so dass der durch die separate Antriebseinheit angetriebene Überrollkörper zuverlässig in die Überschlagsposition verstellbar ist. Die Öffnungseinheit ist dabei im Bereich zwischen dem Überrollkörper und dem Verkleidungsbauteil angeordnet und bewirkt somit unmittelbar nach deren Aktivierung eine Öffnung des Verkleidungsbauteils, d. h. die Herstellung einer Durchtrittsöffnung, so dass das Verkleidungsbauteil beim Aufstellen des Überrollkörpers diesem keinen Widerstand entgegenbringt, der die Aufstellung hemmt.

Die Erfindung weist den Vorteil auf, dass eine Dimensionierung der Antriebseinheit der Überrollschutzsysteme unabhängig von den diese überdeckenden Verkleidungsbauteilen erfolgen kann. Die Auslegung der Antriebseinheit kann allein unter Berücksichtigung der zu erreichenden Aufstellbewegung des Überrollkörpers vorgenommen werden. Eine Berücksichtigung des durch die Verkleidungsbauteile entgegengebrachten Widerstandes ist nicht erforderlich, nachdem die Öffnungseinheit eine zuverlässige Ausbildung einer Durchtrittsöffnung für den Überrollkörper gewährleistet.

Die Ausgestaltung der Öffnungseinheit ist dabei grundsätzlich frei wählbar. So kann die Öffnungseinheit bspw. derart ausgebildet sein, dass sie nach ihrer Aktivierung eine vorgefertigte, die Durchtrittsöffnung überdeckende Abdeckung bspw. pyrotechnisch entfernt. Nach einer besonders vorteilhaften Ausgestaltung der Erfindung ist jedoch vorgesehen, dass die Öffnungseinheit einen im Crashfall aktivierbaren Durchstoßkörper aufweist, der nach der Aktivierung das Verkleidungsbauteil durchstößt. Gemäß dieser Weiterbildung der Erfindung weist die Öffnungseinheit ein mechanisches Bauteil auf, welches derart gegen das Verkleidungsbauteil wirkt, dass eine Durchtrittsöffnung ausgebildet wird, wobei das Verkleidungsbauteil auch im Bereich der zu erzeugenden Durchtrittsöffnung bereits mit einer strukturellen Schwächung versehen sein kann. Der Durchstoßkörper kann dabei beliebig ausgebildet sein, bspw. durch eine oder mehrere aufstellbare Bolzen, welche in das Verkleidungsbauteil bewegt werden und dies perforieren oder auch eine die Durchtrittsöffnung verschließende Abdeckung entfernen, bspw. aufklappen.

Gemäß einer besonders vorteilhaften Ausgestaltung der Erfindung ist der Durchstoßkörper jedoch durch einen Airbag und/oder durch eine den Überrollkörper in der Ruhelage überdeckende, in Richtung auf das Verkleidungsbauteil verstellbare Klappe oder Abdeckkappe gebildet. Im Falle der Verwendung eines Airbags als Durchstoßkörper ist dieser im Bereich zwischen dem Überrollkörper und dem Verkleidungsbauteil derart angeordnet und ausgebildet, dass dessen Expansion im Falle einer Aktivierung eine Öffnung der Durchtrittsöffnung im Verkleidungsbauteil bewirkt, wobei der Airbag unmittelbar auf das Verkleidungsbauteil wirkt. Der Expansionsdruck des Airbags ist dabei derart, dass dieser im expandierten Zustand durch die Durchtrittsöffnung des Verkleidungsbauteils ragt.

Der Durchstoßkörper kann auch durch eine in der Ruhelage den Überrollkörper überdeckende Klappe oder Abdeckkappe gebildet sein, welche im Falle der Aktivierung der Öffnungseinheit in Richtung auf das Verkleidungsbauteil verstellt wird, wobei im Rahmen der Verstellbewegung die Abdeckkappe oder Klappe das Verkleidungsbauteil durchdringt und eine Durchtrittsöffnung erstellt. Die Verwendung einer Abdeckkappe oder Klappe ermöglicht es, in Abhängigkeit von der Ausgestaltung dieser Bauteile eine definierte Belastung des Verkleidungsbauteils zu erreichen, wodurch eine definierte Durchtrittsöffnung ausgebildet werden kann.

Der Antrieb der Abdeckkappe oder Klappe kann dabei grundsätzlich in beliebiger Weise erfolgen. Besonders vorteilhafterweise ist vorgesehen, dass die Klappe und/oder die Abdeckkappe durch einen Airbag antreibbar sind. Gemäß dieser Ausgestaltung der Erfindung dient der sich im Gefahrenfall expandierende Airbag dazu, die Abdeckkappe oder Klappe in Richtung auf das Verkleidungsbauteil zu beschleunigen, wobei hierzu der Airbag auf der dem Verkleidungsbauteil abgewandten Seite der Abdeckkappe oder Klappe angeordnet ist. Die Verwendung eines Airbags ebenso wie dessen unmittelbare Verwendung zur Öffnung des Verkleidungsbauteils weist den Vorteil auf, dass dieser kurz nach Aktivierung unmittelbar zu der Ausbildung einer Durchtrittsöffnung im Verkleidungsbauteil führt. Die zusätzliche Verwendung einer Abdeckkappe oder Klappe bietet darüber hinaus den Vorteil, dass diese vorteilhafterweise starr ausgebildeten Bauteile eine besonders zuverlässige Durchdringung des Verkleidungsbauteils gewährleisten. Die Abdeckkappe oder Klappe kann dabei verschwenkbar an einer Halterung des Überrollschutzsystems oder derart mit diesem verbunden sein, dass diese nach Aktivierung vollständig von dem Überrollschutzsystem getrennt werden.

Von zunehmender Bedeutung für den allgemeinen Fahrkomfort ist es, dass es bei den im Normalfall im Fahrzeugbetrieb auftretenden Fahrzeugzuständen nicht zu einer Geräuschbelastung, bspw. durch Klappern kommt, wobei dieses auch aus einer Relativbewegung der Bauteile des Überrollschutzsystems resultieren kann. Üblicherweise weisen bekannte Überrollschutzsysteme deshalb geeignete Mittel auf, die eine Relativbewegung der Bauteile des Überrollschutzsystems zueinander - welche zu einem Klappern führen können - festlegen. Entsprechende Klappersicherungen sind jedoch recht aufwendig und kostenintensiv, zumal auch im Gefahrenfall eine zuverlässige Verlagerung des Überrollkörpers gewährleistet werden muss.

Gemäß einer Weiterbildung der Erfindung ist daher vorgesehen, dass der Durchstoßkörper ein Sicherungselement aufweist, das im nicht aktivierten Zustand der Öffnungseinheit ein den Überrollkörper in der Ruhelage lagesicherndes Verriegelungselement arretiert. Diese Weiterbildung der Erfindung geht davon aus, dass in der Ruhelage des Überrollkörpers in seiner Lage durch ein Verriegelungselement festgelegt ist. Das Verriegelungselement muss dabei derart ausgebildet sein, dass im Falle einer Aktivierung des Überrollschutzsystems der Überrollkörper aus seiner Ruhelage zuverlässig in die Überschlagsposition verstellbar ist. Insofern muss das Verriegelungselement zwischen einer lagesichernden Position und einer Freigabeposition verstellbar sein, was wiederum unter Umständen zu einer Relativverschiebung des Überrollkörpers in der Ruhelage und damit zu Klappergeräuschen führen kann.

Gemäß der Weiterbildung der Erfindung ist vorgesehen, dass das Verriegelungselement durch ein am Durchstoßkörper angeordnetes Sicherungselement in der lagesichernden Position verriegelt ist, wodurch Relativbewegungen des Überrollkörpers zuverlässig ausgeschlossen werden können, nachdem das lagesichernde Verriegelungselement zuverlässig in seiner lagesichernden Position gehalten ist. Mit einer Aktivierung der Öffnungseinheit und einer damit einhergehenden Verlagerung des Durchstoßkörpers gelangt auch das Sicherungselement außer Eingriff mit dem Verriegelungselement, so dass dann der Überrollkörper im Falle einer Aktivierung zuverlässig in die Überschlagsposition verstellbar ist.

Die Ausgestaltung des Verriegelungselements, welches mit dem Sicherungselement in der nicht aktivierten Lage der Öffnungseinheit zusammenwirkt, ist dabei grundsätzlich frei wählbar. Nach einer besonders vorteilhaften Ausgestaltung der Erfindung ist jedoch vorgesehen, dass das Verriegelungselement eine in Richtung auf dessen lagesichernde Position verstellbaren und/oder vorgespannten Rastvorsprung aufweist, der in der lagesichernden Position mit einer an einer Halterung des Überrollschutzsystems angeordneten Verriegelungselementaufnahme in Eingriff befindlich ist.

Gemäß dieser Ausgestaltung ist fahrzeugfest, nämlich an einer Halterung des Überrollschutzsystems eine Verriegelungselementaufnahme angeordnet, in welcher das Verriegelungselement in der lagesichernden Position angeordnet ist. Um eine zuverlässige Lagesicherung zu gewährleisten, weist dabei das Verriegelungselement einen Rastvorsprung auf, welcher zum einen eine zuverlässige Festlegung des Überrollkörpers in der Ruhelage gewährleistet und zum anderen über dessen Verstellbarkeit, auch gegen eine ggf. vorhandene Vorspannung auch im Falle einer Aktivierung eine zuverlässige Verlagerung des Überrollkörpers erlaubt. In der nicht aktivierten Position der Öffnungseinheit verhindert jedoch das nach einer vorteilhaften Weiterbildung vorgesehene Sicherungselement eine Verlagerung des Verriegelungselements derart, dass der nach der vorteilhaften Weiterbildung vorgesehene Rastvorsprung mit der Verriegelungselementaufnahme außer Eingriff gelangt, wodurch eine Verstellung des Überrollkörpers möglich wäre. Erst nach einer Aktivierung der Öffnungseinheit, durch die auch eine Verlagerung des Sicherungselements stattfindet, ist das Verriegelungselement verstellbar und es kann eine Verlagerung des Überrollkörpers erfolgen.

Die Anordnung des Verriegelungselements an dem Überrollkörper, damit dessen Zusammenwirken mit einer vorteilhafterweise vorgesehenen Verriegelungselementaufnahme eine Arretierung des Überrollkörpers bewirkt, kann grundsätzlich in beliebiger Weise erfolgen. Nach einer besonders vorteilhaften Ausgestaltung der Erfindung ist jedoch vorgesehen, dass das Verriegelungselement mit einem am Überrollkörper angeordneten Tragelement verbunden ist. Durch diese Ausgestaltung der Erfindung kann eine unabhängig von der Ausgestaltung des Überrollkörpers vorgenommene Anordnung der Verriegelungselemente erfolgen. Über die mechanische Verbindung des Tragelements mit dem Überrollkörper ist dabei gewährleistet, dass das Verriegelungselement den Überrollkörper in der Ruhelage lagesichert. Das Tragelement kann dabei in beliebiger Weise, bspw. durch einfache, mit dem Überrollkörper verbundene Bleche gebildet sein.

Die Ausgestaltung des Verriegelungselements ist ebenfalls grundsätzlich frei wählbar. Nach einer besonders vorteilhaften Ausgestaltung der Erfindung ist jedoch vorgesehen, dass das Verriegelungselement durch eine Rastlasche mit einem an ihrem freien Ende angeordneten Rastvorsprung gebildet ist, wobei sich die Rastlasche in der lagesichernden Position durch eine Aufnahmeöffnung der Verriegelungselementaufnahme erstreckt und wobei das Sicherungselement durch einen Stiftkörper gebildet ist, der im nicht aktivierten Zustand der Öffnungseinheit derart in der Aufnahmeöffnung angeordnet ist, dass eine Verlagerung der Rastlasche blockiert ist. Gemäß dieser Ausgestaltung der Erfindung wird das Verriegelungselement durch einfach herstellbare Rastlaschen gebildet, welche mit einem Rastvorsprung an ihrem freien Ende eine zuverlässige Lagesicherung des Überrollkörpers über die Verriegelungselementaufnahmen gewährleisten. Zur Lagesicherung der Rastlaschen dient dabei ein Stiftkörper, welcher derart in der Aufnahmeöffnung angeordnet ist, dass dieser die ebenfalls in der Aufnahmeöffnung angeordnete Rastlasche gegen eine Verlagerung blockiert. Diese Ausgestaltung der Erfindung lässt sich besonders einfach und kostengünstig herstellen und weist eine hohe Funktionssicherheit auf, nachdem es zur Verlagerung des Überrollkörpers lediglich erforderlich ist, den Durchtrittskörper zu verlagern, wodurch auch die Stiftkörper verlagert werden.

Nach einer besonders vorteilhaften Ausgestaltung der Erfindung sind die Sicherungselemente durch die freien Enden eines an der Klappe oder Abdeckkappe angeordneten Sicherungsbügels gebildet, wobei die Sicherungselemente im nicht aktivierten Zustand der Öffnungseinheit in zwei gegenüberliegend an der Halterung angeordneten Verriegelungselementaufnahmen angeordnet sind. Durch diese Ausgestaltung der Erfindung wird, insbesondere durch die doppelt wirkenden Sicherungselemente, eine besonders zuverlässige Lagesicherung des Überrollkörpers in der Ruhelage gewährleistet.

Nach einer weiteren Ausgestaltung der Erfindung ist das Tragelement an einem Innenschenkel eines als Klappbügel ausgebildeten Überrollkörpers oder an einer Oberseite eines als Innenprofil ausgebildeten Überrollkörpers angeordnet und weist zwei sich in der Ruhelage durch gegenüberliegend an der Halterung angeordnete Verriegelungselementaufnahme erstreckende Rastlaschen auf.

Ausführungsbeispiele der Erfindung werden nachstehend mit Bezug auf die Zeichnungen erläutert. In den Zeichnungen zeigen:
- Fig. 1: eine perspektivische Ansicht einer ersten Ausführungsform eines Überrollschutzsystems mit einem als Klappbügel ausgebildeten Überrollkörper;
- Fig. 2a: eine perspektivische Ansicht des Überrollschutzsystems von Fig. 1 in einer Ruhelage unter einem partiell dargestellten Verkleidungsbauteil;
- Fig. 2b: eine Seitenansicht des Überrollschutzsystems von Fig. 2a;
- Fig. 3: eine perspektivische Darstellung des Überrollschutzsystems von Fig. 1 in einer Ruhelage;
- Fig. 4: eine perspektivische Darstellung des Überrollschutzsystems von Fig. 3 in der Ruhelage teilweise im Schnitt;
- Fig. 5: eine perspektivische Darstellung des Überrollschutzsystems von Fig. 3 in einer teilaufgestellten Position eines Durchschlagkörpers teilweise im Schnitt;
- Fig. 6: eine perspektivische Darstellung des Überrollschutzsystems von Fig. 3 in einer Überschlagsposition des Klappbügels;
- Fig. 7a: eine Seitenansicht einer zweiten Ausführungsform eines Überrollschutzsystems mit einem als Profilkörper ausgebildeten Überrollkörper unterhalb eines Verkleidungsbauteils;
- Fig. 7b: eine perspektivische Ansicht auf das Überrollschutzsystem von Fig. 7a in seiner Lage unterhalb des Verkleidungsbauteils;
- Fig. 8a: eine Seitenansicht des Überrollschutzsystems von Fig. 7a mit aktivierter Öffnungseinheit;
- Fig. 8b: eine perspektivische Darstellung des Überrollschutzsystems von Fig. 1 in der in Fig. 8a dargestellten Position;
- Fig. 9a: eine perspektivische Darstellung des Überrollschutzsystems von Fig. 7a in einer teilweise ausgefahrenen Position des Profilkörpers und
- Fig. 9b: eine perspektivische Darstellung des Überrollschutzsystems von Fig. 7a in der in Fig. 9a dargestellten Position.

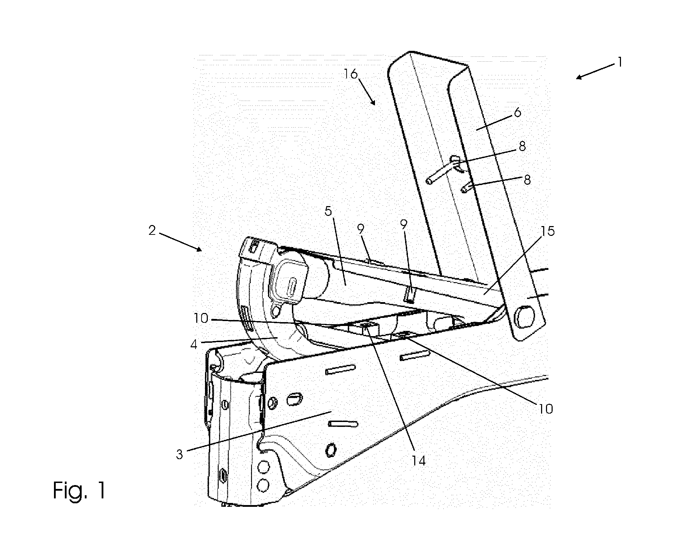

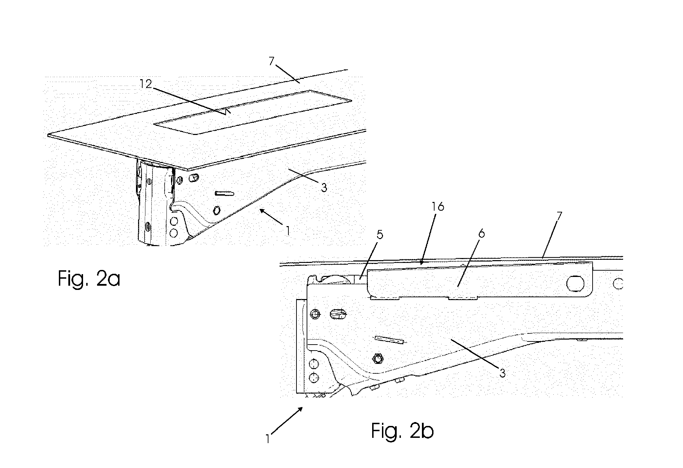

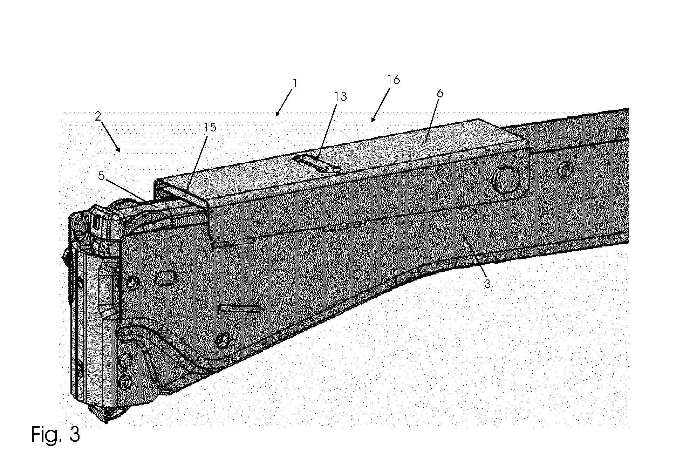

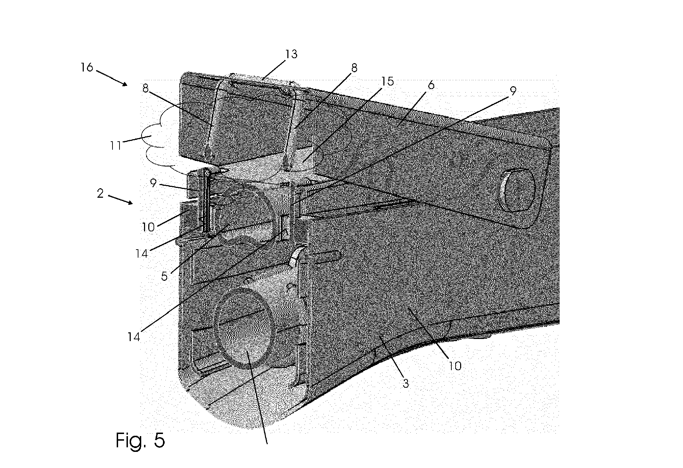

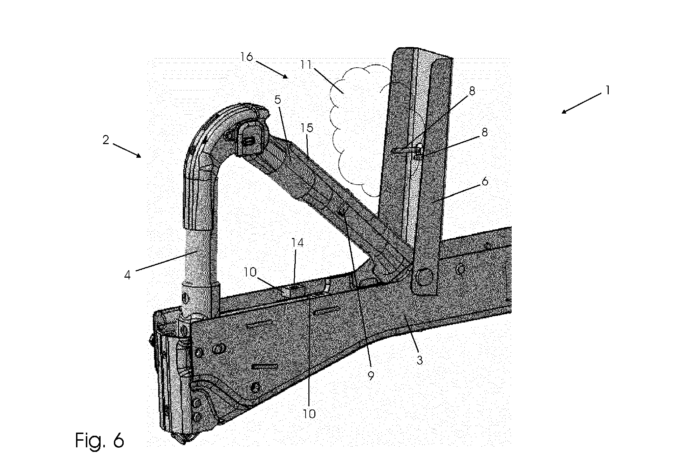

In Fig. 1 ist in einer perspektivischen Darstellung eine erste Ausführungsform eines Überrollschutzsystems 1 dargestellt. Bei diesem Überrollschutzsystem 1 wird der Überrollkörper durch einen Klappbügel 2 gebildet, welcher zwei drehgelenkig miteinander verbundene Schenkel 4, 5 aufweist. In der Ruhelage befinden sich der Innenschenkel 5 und der Außenschenkel 4 - bezogen auf die Einbaulage am Kraftfahrzeug - übereinander und erstrecken sich quer zur Fahrzeuglängsachse. Eine Aktivierung des Überrollschutzsystems 1 bewirkt eine Aufstellung des Klappbügels 2, wobei das in der Ruhelage der Fahrzeugmitte zugewandte Ende des Außenschenkels 4 in Richtung auf das Fahrzeugäußere verschoben wird, wodurch sich der Klappbügel 2 ausgehend aus der in den Fig. 2a, 2b, 3 und 4 dargestellten Ruhelage über eine in den Fig. 1 und 5 dargestellte Zwischenlage in eine in Fig. 6 dargestellte Überschlagsposition bewegt. Zur Anordnung des Überrollschutzsystems 1 an einem Fahrzeug dient dabei eine Halterung 3, mittels derer das Überrollschutzsystem 1 fahrzeugfest fixierbar ist.

Abweichend von bekannten Überrollschutzsystemen weist das in den Fig. 1 - 6 dargestellte Überrollschutzsystem 1 eine im Bereich zwischen dem Klappbügel 2 in der Ruhelage und einem diesen überdeckenden Verkleidungsbauteil 7 eine Klappe 6 auf. Die Klappe 6 ist Bestandteil einer Öffnungseinheit 16, mittels derer das das Überrollschutzsystem 1 überdeckende Verkleidungsbauteil 7 unabhängig von einer Verstellung des Klappbügels 2, hervorgerufen durch eine hier nicht dargestellte Antriebseinheit, durchdrungen werden kann, so dass eine Durchtrittsöffnung 12 für den Klappbügel 2 gebildet wird. Zum Antrieb der einen Durchstoßkörper bildenden Klappe 6 dient dabei ein im Bereich zwischen dem Klappbügel 2 und der Klappe 6 angeordneter Airbag 11, der im Falle einer Aktivierung aufgrund der sich dann einstellenden Expansion eine Verlagerung der Klappe 6 in Richtung auf das Verkleidungsbauteil 7 und durch dieses hindurch bewirkt, so dass die Durchtrittsöffnung 12 im Verkleidungsbauteil 7 für den Klappbügel 2 geöffnet ist und dieser dann ungehindert in die in Fig. 6 dargestellte Überschlagsposition aufgestellt werden kann.

Zur Lagesicherung des Überrollbügels 2 in seiner Ruhelage sind zwei Haltelaschen 9 vorgesehen, die sich beiderseits des Innenschenkels 5 erstrecken und an einem an dem Innenschenkel 5 angeordneten Tragelement 15 angeordnet sind. In der Ruhelage ragen die Rastlaschen 9 mit ihren freien Enden in eine Aufnahmeöffnung 14 einer Verriegelungselementaufnahme 10, welche an der Halterung 3 des Überrollschutzsystems 1 befestigt ist. An den freien Enden des Rastlasche 9 angeordnete Rastvorsprünge gewährleisten dabei, dass der Überrollkörper 2 zuverlässig in seiner Ruhelage arretiert ist, wobei über die elastische Ausgestaltung der Rastvorsprünge 9 sowie die schräg verlaufenden Rastvorsprünge 9 gewährleistet ist, dass der Überrollbügel 2 im Falle einer Aktivierung in die Überschlagsposition verstellt werden kann.

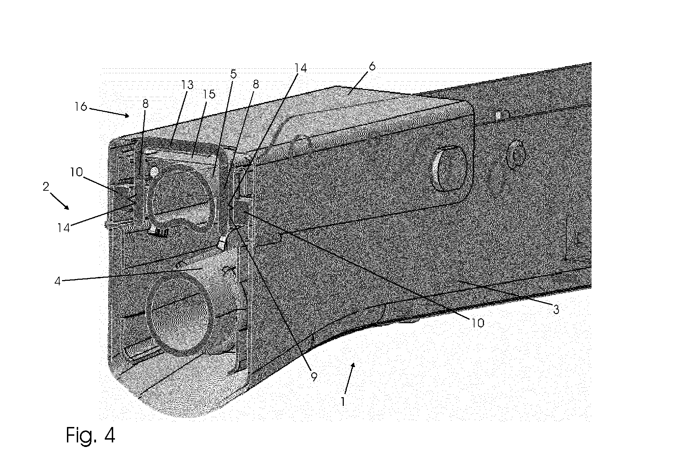

Um eine ungewollte und nicht erforderliche Verlagerung der Rastlaschen 9 im Normalbetrieb zu verhindern, weist die Klappe 6 einen Sicherungsbügel 13 auf, dessen Sicherungselemente 8 bildenden freien Enden in der Ruhelage ebenfalls in den Aufnahmeöffnungen 14 angeordnet sind und damit eine Verlagerung der Rastlaschen 9 in eine Freigabeposition verhindern, in der eine Verstellung des Überrollkörpers 2 möglich ist (vgl. Fig. 4).

Eine Verlagerung des Klappbügels 2 ist erst nach einer Verstellung der Klappe 6 möglich, durch die die Sicherungselemente 8 mit den Rastlaschen 9 außer Eingriff gelangen, so dass diese derart gegenüber den Verriegelungselementaufnahmen 10 verstellt werden können, dass eine Verlagerung des Überrollkörpers 2 erfolgen kann (vgl. Fig. 5). Aufgrund der Anbindung des Sicherungsbügels 13 an der Klappe 6 erfolgt dabei eine Entriegelung gleichzeitig mit einer Aktivierung der Öffnungseinheit 16 durch die dann auch das Verkleidungsbauteil 7 mit einer Durchtrittsöffnung 12 versehen wird.

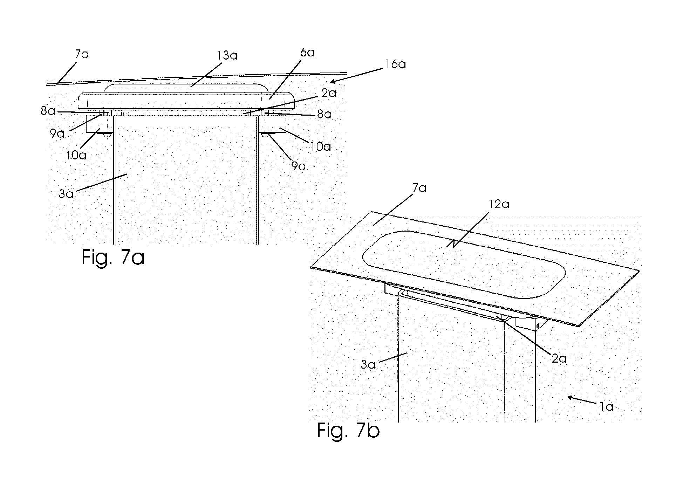

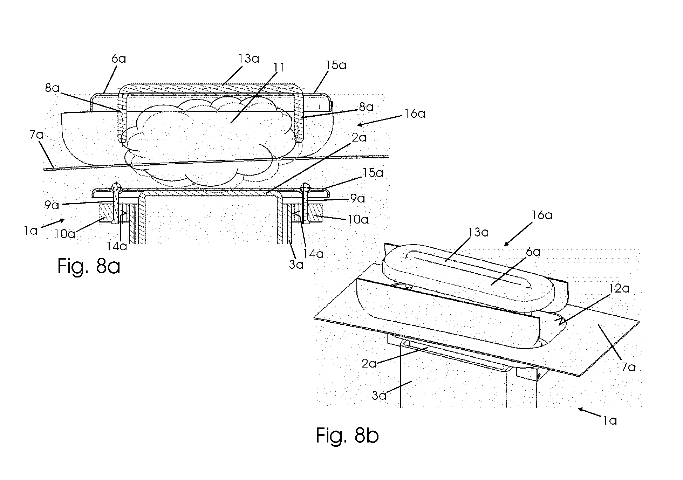

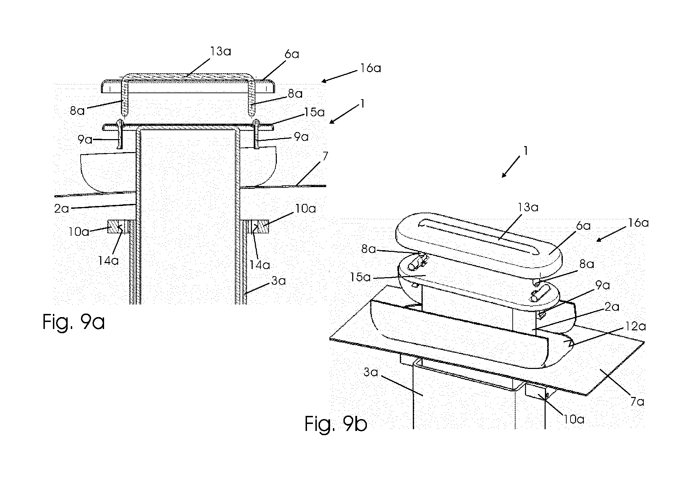

Ein zweites Ausführungsbeispiel eines Überrollschutzsystems 1a ist in den Fig. 7a - 9b dargestellt. Wie auch das in den Fig. 1 - 6 dargestellte Ausführungsbeispiel des Überrollschutzsystems 1 ist auch das Überrollschutzsystem 1a in der Einbaulage am Kraftfahrzeug unterhalb eines Verkleidungsbauteils 7a angeordnet, so dass der Überrollkörper 2a nicht sichtbar ist. Im Gegensatz zu dem in den Fig. 1 - 6 dargestellten Überrollschutzsystem 1 weist das Überrollschutzsystem 1a jedoch keinen als Klappbügel 2 ausgebildeten Überrollkörper, sondern einen als Profilkörper 2a ausgebildeten Überrollkörper auf. Der Profilkörper 2a ist gegenüber einer fahrzeugfest anordbaren Halterung 3a aus der in den Fig. 7a und 7b dargestellten Ruhelage über eine erste in den Fig. 8a und 8b sowie über eine zweite in den Fig. 9a und 9b dargestellte Zwischenposition bis in eine hier nicht dargestellte Überschlagsposition verstellbar.

Wie auch das Überrollschutzsystem 1 so weist auch das Überrollschutzsystem 1a eine Öffnungseinheit 16a auf, deren Bestandteil eine Abdeckkappe 6a ist, welche analog zur Klappe 6 als Durchstoßkörper fungiert, um in dem Verkleidungsbauteil 7a eine Durchtrittsöffnung 12a auszubilden. Im Falle einer Aktivierung der Öffnungseinheit 16a erfolgt eine Expansion eines Airbags 11, durch die die Abdeckkappe 6a von dem Profilkörper 2a abgehoben und durch das Verkleidungsbauteil 7a hindurchbewegt wird, wodurch die Durchtrittsöffnung 12a geöffnet wird.

Zur Lagesicherung des Profilkörpers 2a in der Ruhelage weist die Abdeckkappe 6a analog zur Klappe 6 des Überrollschutzsystems 1 einen Sicherungsbügel 13a auf, dessen freien Enden Sicherungselemente 8a bilden, die in der Ruhelage in Aufnahmeöffnungen 14a der Verriegelungselementaufnahme 10a angeordnet, die wiederum an der Halterung 3a befestigt sind. Die Sicherungselemente 8a fixieren die Verriegelungselemente 9a innerhalb der Aufnahmeöffnung 14 derart, dass diese nicht in eine Position verstellt werden können, in der der Profilkörpers 2a gegenüber der Halterung 3a verlagerbar ist. Erst eine Verlagerung der Abdeckkappe 6a derart, dass die Sicherungselement 8a mit den Verriegelungselementaufnahmen 10a außer Eingriff gelangen verschafft den Rastlaschen 9a einen Spielraum innerhalb der Aufnahmeöffnung 14a, so dass dann der Überrollkörper 2a gegenüber der Halterung 3a verlagerbar ist. Die Rastlaschen 9a sind dabei an einem sich an der Oberseite des Profilkörpers 2a erstreckenden Tragelement 15a gelenkig angeordnet.

## Patentansprüche

1. Überrollschutzsystem für Kraftfahrzeuge, mit einem Überrollkörper, der mittels einer Antriebseinheit aus einer durch ein Verkleidungsbauteil überdeckten Ruhelage in eine das Verkleidungsbauteil durchdringende Überschlagsposition verstellbar ist, **dadurch gekennzeichnet, dass** im Bereich zwischen dem Verkleidungsbauteil (7, 7a) und dem Überrollkörper (2, 2a) eine Öffnungseinheit (16, 16a) angeordnet ist, die derart ausgebildet ist, dass deren Aktivierung die Ausbildung einer Durchtrittsöffnung (12, 12a) für den Überrollkörper (2, 2a) in dem Verkleidungsbauteil (7, 7a) bewirkt.

2. Überrollschutzsystem nach Anspruch 1, **dadurch gekennzeichnet, dass** die Öffnungseinheit (16, 16a) einen im Crashfall aktivierbaren Durchstoßkörper (, 6a, 11) aufweist, der nach der Aktivierung das Verkleidungsbauteil (7, 7a) durchstößt.

3. Überrollschutzsystem nach Anspruch 1 oder 2, **dadurch gekennzeichnet, dass** der Durchstoßkörper durch einen Airbag (11) und/oder durch eine den Überrollkörper (2, 2a) in der Ruhelage überdeckende, in Richtung auf das Verkleidungsbauteil (7, 7a) verstellbare Klappe (6) oder Abdeckkappe (6a) gebildet ist.

4. Überrollschutzsystem nach einem der vorhergehenden Ansprüche, **dadurch gekennzeichnet, dass** die Klappe (6) und/oder die Abdeckkappe (6a) durch einen Airbag antreibbar ist.

5. Überrollschutzsystem nach einem der vorhergehenden Ansprüche, **dadurch gekennzeichnet, dass** der Durchstoßkörper (6, 6a, 11) ein Sicherungselement (8, 8a) aufweist, das im nicht aktivierten Zustand der Öffnungseinheit (16, 16a) ein den Überrollkörper (2, 2a) in der Ruhelage lagesicherndes Verriegelungselement (10, 10a) arretiert.

6. Überrollschutzsystem nach einem der vorhergehenden Ansprüche, **dadurch gekennzeichnet, dass** das Verriegelungselement (10, 10a) einen in Richtung auf dessen lagesichernde Position verstellbaren und/oder vorgespannten Rastvorsprung aufweist, der in der lagesichernden Position mit einer an einer Halterung (3, 3a) des Überrollschutzsystems (1, 1a) angeordneten Verriegelungselementaufnahme (10, 10a) in Eingriff befindlich ist.

7. Überrollschutzsystem nach einem der vorhergehenden Ansprüche, **dadurch gekennzeichnet, dass** das Verriegelungselement (10, 10a) mit einem am Überrollkörper (2, 2a) angeordneten Tragelement (15, 15a) verbunden ist.

8. Überrollschutzsystem nach einem der vorhergehenden Ansprüche, **dadurch gekennzeichnet, dass** das Verriegelungselement durch eine Rastlasche (9, 9a) mit einem an ihrem freien Ende angeordneten Rastvorsprung gebildet ist, wobei sich die Rastlasche (10, 10a) in der lagesichernden Position durch eine Aufnahmeöffnung (14, 14a) der Verriegelungselementaufnahme (10, 10a) erstreckt und wobei das Sicherungselement durch einen Stiftkörper (8, 8a) gebildet ist, der im nicht aktivierten Zustand der Öffnungseinheit (16, 16a) derart in der Aufnahmeöffnung (14, 14a) angeordnet ist, dass diese eine Verlagerung der Rastlasche (9, 9a) blockiert.

9. Überrollschutzsystem nach einem der vorhergehenden Ansprüche, **dadurch gekennzeichnet, dass** die Sicherungselemente (8, 8a) durch die freien Enden eines an der Klappe (6) oder Abdeckkappe (6a) angeordneten Sicherungsbügels (13,13a) gebildet sind, die im nicht aktivierten Zustand der Öffnungseinheit (16, 16a) in zwei gegenüberliegende an der Halterung (3, 3a) angeordneten Verriegelungselementaufnahmen (10, 10a) angeordnet sind.

10. Überrollschutzsystem nach einem der vorhergehenden Ansprüche, **dadurch gekennzeichnet, dass** das Tragelement (15,15a) an einem Innenschenkel eines als Klappbügel (2) ausgebildeten Überrollkörper oder an einer Oberseite eines als Innenprofil (2a) ausgebildeten Überrollkörpers angeordnet ist und zwei sich in der Ruhelage durch gegenüberliegend an der Halterung (3, 3a) angeordnete Verriegelungselementaufnahmen (10, 10a) erstreckende Rastlaschen (9, 9a) aufweist.
